# EUROPÄISCHE PATENTSCHRIFT

(11) **EP 2 650 195 B1**
(45) Veröffentlichungstag und Bekanntmachung des Hinweises auf die Patenterteilung: **07.01.2015**
(21) Anmeldenummer: 12007728.4
(22) Anmeldetag: 15.11.2012
(51) Int. Cl.: B62D 33/06, B62D 33/07, B62D 33/067

(54) **Hintere Lagerung eines Nutzfahrzeugfahrerhauses**
Rear mounting for the driver's cab of a utility vehicle
Articulation postérieure pour cabine de véhicule utilitaire

(30) Priorität: 12.04.2012 AT 4422012
(43) Veröffentlichungstag der Anmeldung: 16.10.2013
(73) Patentinhaber: MAN Truck & Bus Österreich AG, 4400 Steyr (AT)
(72) Erfinder: Täuber, Klemens, 4400 Steyr (AT); Meister, Mario, 81241 München (DE); Aschauer, Johann Peter, 4720 Neumarkt (AT); Neide, Peter, 85250 Altomünster (DE)

(56) Entgegenhaltungen:
- EP-A2- 1 334 900
- DE-A1- 19 961 670
- US-A1- 2004 012 247
- US-B1- 7 090 306

## Beschreibung

Die Erfindung betrifft die hintere Lagerung eines Nutzfahrzeugfahrerhauses mit einer quer zu Rahmenlängsträgern angeordneten Quertraverse, die beidseitig über jeweils ein Lageranordnung an den Rahmenlängsträgern eines Fahrgestellrahmens befestigt ist, wobei die Lageranordnung eine Feder- und/oder Dämpfereinheit sowie eine Seitenführungseinheit aufweist, die an unterschiedlichen Anlenkungspunkten der Quertraverse befestigt sind, und die Seitenführungseinheit eine vertikal innerhalb einer Führung beweglich angeordnete Rolle aufweist, die über ein Befestigungsmittel an der Quertraverse befestigt ist.

Die insbesondere in Europa zurzeit überwiegend zum Einsatz kommenden Lastkraftwagen in Frontlenkerbauweise verfügen üblicherweise über vier Fahrerhauslager, die das Fahrerhaus mit dem Fahrgestellrahmen verbinden und von denen zwei im vorderen und zwei im hinteren Bereich angeordnet sind. Hierbei kann das Fahrerhaus üblicherweise um die beidem vorderen Lagerpunkte zu Wartungs- und Reparaturarbeiten am Motor nach vorne gekippt bzw. geschwenkt werden. In Ergänzung hierzu sind die hinteren Fahrerhauslager derart ausgeführt, dass das Fahrerhaus zum Kippen vom Fahrgestellrahmen trennbar ist. Um die Fahrsicherheit und einen zufriedenstellenden Fahrkomfort sicher zu stellen, sind im Bereich der Fahrerhauslagerung in der Regel Feder- und/oder Dämpfereinheiten vorgesehen, die die vom Fahrgestell auf das Fahrerhaus einwirkenden Kräfte aufnehmen und zumindest teilweise für eine Schwingungsentkopplung und/oder Dämpfung sorgen.

In diesem Zusammenhang ist aus der gattungsgemäßen EP 1 334 900 B1 die hintere Lagerung eines kippbaren Fahrerhauses eines Frontlenker-Lastkraftwagens bekannt, bei der das Fahrerhaus über einen zum Kippen lösbaren Verriegelungsmechanismus mit einer etwa U-förmigen Quertraverse verbunden ist. Die Quertraverse ist ihrerseits beidseitig an den Rahmenlängsträgern des Fahrgestellrahmens befestigt, wobei zwischen Quertraverse und Fahrgestellrahmen auf beiden Fahrgestellseiten jeweils eine Lageranordnung mit einem an der Außenseite des Rahmenlängsträgers befestigten Lagerbock vorgesehen ist. Die Lageranordnung verfügt ferner sowohl über ein Federbein zur Abfederung von Fahrerhausbewegungen als auch über eine Seitenführung, die auftretende Seitenkräfte aufnehmen soll. Federbein und Seitenführung sind jeweils in ihrem oberen Bereich an unterschiedlichen Anlenkungspunkten mit der Quertraverse verbunden.
Die Seitenführung der Lageranordnung ist derart ausgeführt, dass eine mit Hilfe eines Halters und einer Schraubverbindung an der Quertraverse befestigte Rolle innerhalb eines Führungselements der Seitenführung vertikal beweglich geführt wird. Das Führungselement verfügt hierzu über zwei in Seitenwände eingebrachte Langlöcher mit einer auf den maximalen Fahrerhauseinfederungsweg abgestellten Länge, in denen die Rolle mit ihren Lagerbuchsen sowie eine die Rolle sowie die Buchsen durchragende Schraube eine Vertikalbewegung ausführen können. Aufgrund derart ausgeführter hinterer Lagerelemente kann die Quertraverse und somit auch das daran mittig angebundene Fahrerhaus eine Vertikalbewegung relativ zu den Rahmenlängsträgern ausführen, wobei Kräfte quer zu den Rahmenlängsträgern durch die Seitenführung aufgenommen werden.

Problematisch an der bekannten Seitenführung einer hinteren Fahrerhauslagerung ist, dass die für die Seitenführung zum Einsatz kommenden Rollen aus Polyamid gefertigt sind. Derartige Rollen verursachen während der Fahrt, verbunden mit den entsprechenden Bewegungen des Fahrgestells sowie des Fahrerhauses, teilweise Klapper- und Quietschgeräusche, die als unangenehm empfunden werden.

Ausgehend von der bekannten Fahrerhauslagerung mit einer Seitenführung, bei der die hinteren Fahrerhauslager über eine Quertraverse auf den Rahmenlängsträgern abgestützt sind, liegt der Erfindung die Aufgabe zugrunde, eine technische Lösung anzugeben, die einerseits eine zuverlässige Aufnahme der im Bereich der hinteren Lagerelemente auftretenden Seitenkräfte ermöglicht und darüber hinaus das Auftreten von Klapper- und Quietschgeräuschen zumindest weitgehend verhindert. Darüber hinaus soll das anzugebende Lager auf bevorzugte Weise zumindest über große Frequenzbereiche eine Schwingungsentkopplung zwischen Fahrgestell und Fahrerhaus ermöglichen und so die Körperschallübertragung auf das Fahrerhaus weitgehend verhindern. Die technische Lösung soll mit verhältnismäßig einfachen Mitteln umzusetzen und kostengünstig sein und darüber hinaus keine konstruktiven Änderungen an den bekannten hinteren Lagerelementen erfordern.

Die vorstehende beschriebene Aufgabe wird mit Hilfe der hinteren Fahrerhauslagerung eines Nutzfahrzeugs gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist die hintere Lagerung eines Nutzfahrzeugfahrerhauses mit einer quer zu Rahmenlängsträgern angeordneten Quertraverse, die beidseitig über jeweils eine Lageranordnung an den Rahmenlängsträgern eines Fahrgestellrahmens befestigt ist, wobei die Lageranordnung eine Feder- und/oder Dämpfereinheit sowie eine Seitenführungseinheit aufweist, die an unterschiedlichen Anlenkungspunkten der Quertraverse befestigt sind, und die Seitenführungseinheit eine vertikal innerhalb einer Führung beweglich angeordnete Rolle aufweist, die über ein Befestigungsmittel an der Quertraverse befestigt ist, derart weitergebildet worden, dass die Rolle von wenigstens einer Schraube oder einem Bolzen durchdrungen wird, die bzw. der innerhalb eines Lagerauges der Führung vertikal beweglich angeordnet ist, und die Rolle wenigstens einen Innen- und einen Außenteil aufweist, wobei der Innenteil einen thermoplastischen Kunststoff und der Außenteil ein thermoplastisches Elastomer aufweist.

Die erfindungsgemäße technische Lösung beruht somit im Wesentlichen auf der Verwendung einer Hybridrolle, also einer innerhalb der Seitenführung in vertikaler Richtung geführten Rolle, die aus zwei unterschiedlichen Werkstoffen gefertigt ist. Erfindungsgemäß bildet ein thermoplastischer Kunststoff eine innenliegende Buchse, die von einem ein thermoplastisches Elastomer aufweisenden Außenteil umgeben ist. Vorzugsweise sind der Innen- sowie der Außenteil in einem Kontaktbereich derart konturiert, dass eine sichere und dauerhafte Verbindung, insbesondere eine formschlüssige Verbindung, zwischen den beiden Teilen realisiert wird. Die erfindungsgemäße technische Lösung stellt auf bevorzugte Weise sicher, dass das Innenteil verschleißfrei die Rotation der Rolle aufnehmen kann, während das Außenteil die auftretenden Schwingungen weich aufnimmt. Hierdurch wird insbesondere eine Körperschallübertragung auf das Fahrerhaus weitgehend vermieden.

In einer bevorzugten Ausführungsform der Erfindung verfügt der Innenteil über ein Polyoxymethylen (POM). Ferner weist der Außenteil auf bevorzugte Weise einen teilkristallinen Thermoplasten, insbesondere ein Polyolefin, auf.

Bei Polyoxymethylen (POM) handelt es sich um einen hoch molekularen thermoplastischen Kunststoff, der durch Polymerisation von gasförmigem Formaldehyd hergestellt wird. Polyoxymethylen zeichnet sich durch eine hohe Festigkeit, Härte und Steifigkeit in einem großen Temperaturbereich aus. Darüber hinaus ist es bis in einen Temperaturbereich von etwa -40°C sehr zäh, weist eine hohe Abriebfestigkeit, einen niedrigen Reibungskoeffizienten sowie hohe Wärmeformbeständigkeit auf.
Polyolefine sind dagegen Polymere, die aus Alkenen, wie Ethylen, Propylen, 1-Buten oder Isobuten durch Polymerisation hergestellt werden. Polyolefine sind teilkristalline Thermoplaste, die sich leicht verarbeiten lassen. Ferner sind Polyolefine robuste, flexible Kunststoffe, die auf besondere Weise für den Einsatz bei einer erfindungsgemäß ausgeführten Rolle der Seitenführung eines hinteren Fahrerhauslagerelementes geeignet sind.

Auf bevorzugte Weise kann der Außenteil Polyethylen (PE), Polypropylen (PP), Polyisobutylen (PIB) oder Polybutylen (PB) aufweisen. Die vorgenannten Stoffe gehören zur Kunststoffgruppe der Polyolefine.

Eine bevorzugte Weiterbildung der Erfindung sieht vor, dass der Innenteil der Rolle durch Spritzen oder Drehen hergestellt ist. Hierbei ermöglicht die Geometrie eines aus Polyoxymethylen (POM) hergestellten Innenteils auf bevorzugte Weise eine entsprechende Herstellung der Buchse. Vorzugsweise erfolgt die Herstellung des Außenteils bzw. der Rolle durch Umspritzen des Innenteils mit wenigstens einem den Außenteil bildenden thermoplastischen Elastomer, vorzugsweise mit einem thermoplastischen Polyolefin, wie es beispielsweise unter der Markenbezeichnung Thermopren^{®} vertrieben wird. Bei der Verwendung eines Innenteils aus einem Polyoxymethylen sowie eines Polyolefin-Elastomeres kann das Umspritzen des Innenteils erfolgen, ohne dass es zu Ablösungserscheinungen kommt. Auf diese Weise kann auf ein teures Zweikomponenten-Spritzwerkzeug verzichtet werden.

In einer weiteren speziellen Ausführungsform der Erfindung ist die Rolle derart ausgeführt, dass eine Wandstärke des Innen- und/oder des Außenteils variiert. Vorzugsweise verfügt das Außenteil in dem für eine Krafteinleitung in die Rolle vorgesehenen Bereich über die größte Wandstärke. In diesem Zusammenhang ist es weiterhin auf bevorzugte Weise denkbar, dass der Innen- und der Außenteil in einem Kontaktbereich jeweils eine derart geformte Innen- bzw. eine Außenkontur aufweisen, dass wenigstens abschnittsweise eine formschlüssige Verbindung zwischen dem Innen- und dem Außenteil besteht. Um eine dauerhafte Verbindung zwischen dem Innen- und dem Außenteil sicherstellen zu können, sieht eine Kontur hierbei geeignete Hinterschneidungen vor. Vorteilhafterweise verfügt der Innenteil hierbei über eine positive Außenkontur, in die eine entsprechende Gegenkontur des Außenteils eingreift.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Figur 1:: Hintere Lagerung eines Nutzfahrzeugfahrerhauses in einer Ansicht von hinten;
- Figur 2:: Detailansicht einer hinteren Fahrerhauslagerung mit Feder-Dämpfereinheit und Seitenführung sowie
- Figur 3:: Schnittansicht einer erfindungsgemäß ausgeführten Rolle für den Einsatz innerhalb der Seitenführung einer hinteren Fahrerhauslagerung.

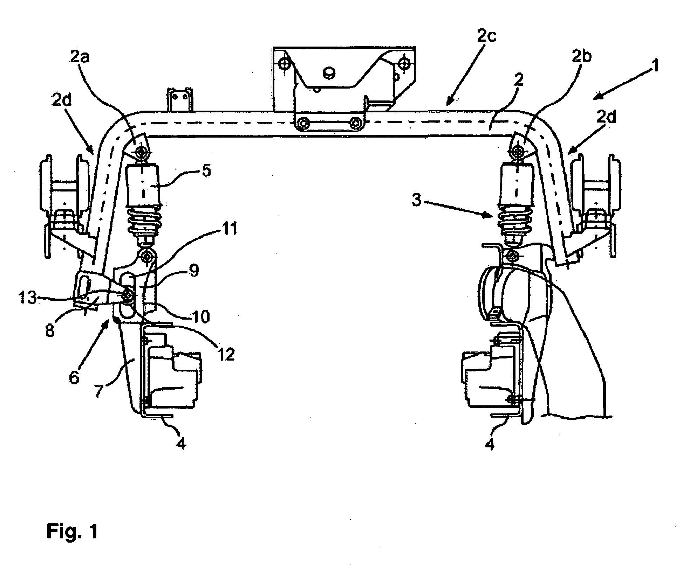

Figur 1 zeigt in einer Ansicht von hinten auf das Fahrerhaus (nicht dargestellt) eine erfindungsgemäß ausgeführte hintere Fahrerhauslagerung 1. Die hintere Fahrerhauslagerung 1 verfügt hierbei im Wesentlichen über eine Quertraverse 2, die beidseitig an zwei Anlenkungspunkten 2a, 2b, mit einer Lageranordnung 3 verbunden ist Die Lageranordnung 3 stellt eine Verbindung zwischen der Quertraverse 2 und den Rahmenlängsträgern 4 her und verfügt einerseits über eine Feder-Dämpfereinheit 5 und andererseits über eine Seitenführung 6, die in der Lagerung 1 auftretende Seitenkräfte aufnimmt. Die Lageranordnung 3 weist ferner einen Lagerbock 7 auf, über den sie jeweils von außen an den Stegen der Rahmenlängsträger 4 angeschraubt ist.

Die von hinten gesehen etwa U-förmige Quertraverse 2 folgt in ihrer Form in etwa der Kontur eines im Fahrerhausboden vorhandenen Motortunnels, unter dem insbesondere der Verbrennungsmotor des Nutzfahrzeugs angeordnet ist. Die Quertraverse 2 weist im Wesentlichen drei Bereiche auf, zum einen den Querholm 2c, zum anderen die sich beidseitig daran anschließenden Seitenschenkel 2d, die jeweils über einen Bogen in den Querholm 2c übergehen. Die Quertraverse 2 ist aus einem Metallrohr, beispielsweise durch Biegen, hergestellt. Die Feder-Dämpfereinheiten 5 der Lageranordnungen 3 sind jeweils an ihrem oberen Ende an Anlenkungspunkten 2a, die sich im Bereich der Bögen, über die der Querholm 2c der Quertraverse 2 in die Seitenschenkel 2d übergeht, an der Quertraverse 2 befestigt. Darüber hinaus ist die Seitenführung 6 über einen Halter 8 im Bereich der Seitenschenkel 2d mit der Quertraverse 2 verbunden.

Im mittleren Bereich des Querholms 2c verfügt die Quertraverse 2 über ein Schloss 8, in dem in nicht gekipptem Zustand des Fahrerhauses ein am Fahrerhaus befestigter Bolzen arretiert ist. Sofern das Fahrerhaus zu Wartungs- oder Reparaturarbeiten nach vorne gekippt werden soll, wird dieses Schloss 8 entriegelt, so dass der Bolzen aus dem Schloss 8 herausgleiten kann. Das Kippen des Fahrerhauses wird hierbei in der Regel hydraulisch oder elektrohydraulisch unterstützt.

Im Folgenden wird die Lageranordnung 3, über die die Quertraverse 2 mit den Rahmenlängsträgern 4 des Fahrgestellrahmens verbunden ist, näher erläutert. Die Lageranordnung 3 ist jeweils einerseits mittels eines Lagerbocks 7 mit den Rahmenlängsträgern 4 verbunden und andererseits über einen Halter 8 der Seitenführung 6 und eine Feder-Dämpfereinheit 5 an der Quertraverse 2 befestigt. In diesem Zusammenhang stellt die Anbindung der Seitenführung 6 an die Quertraverse 2 eine Verbindung dar, die derart ausgeführt ist, dass sich die Quertraverse 2 relativ zu Teilen der Seitenführung 6, insbesondere relativ zum Führungselement 9 bewegen kann.
Die Feder-Dämpfereinheit 5 ist an ihrem unteren Ende an einem Lagerauge des Führungselements 9 der Seitenführung 6 befestigt und weist am oberen Ende ein Lagerauge auf, das im Bereich eines Bogens mit der Quertraverse 2 verbunden ist.

Das Führungselement 9 der Seitenführung 6 ist U-förmig ausgebildet und verfügt über Seitenwände 10, die ein Langloch 11 aufweisen. Innerhalb des Führungselementes 9 ist eine Führungsrolle 12 mit Lagerbuchsen vorgesehen, die von einer Schraube 13, die die Rolle 12 mit einem an die Quertraverse 2 im Bereich eines Seitenschenkels 2d angebundenen Halter 8 verbindet, durchragt wird. Die Führungsrolle 12 ist hierbei sowohl in einer Richtung quer als auch längs zu den Rahmenlängsträgern 4 fixiert, während sie in vertikaler Richtung beweglich gelagert ist. Durch diese Lagerung der Führungsrolle 12 innerhalb des Führungselements 9, die ein geringes Spiel aufweist, so dass die Rolle 12 in Umfangsrichtung drehbar ist, wird eine Vertikalbewegung der Quertraverse 2 relativ zu den Rahmenlängsträgern 4 ermöglicht. Da die Länge der Langlöcher 11 dem maximalen Einfederungsweg des Fahrerhauses entspricht, folgt die Führungsrolle 12 den Vertikalbewegungen des Fahrerhauses und behindert diese nicht. Darüber hinaus stellt die Seitenführung 6 sicher, dass auch im Falle des Bruches einer Feder-Dämpfereinheit 5 das Fahrerhaus sicher am Fahrgestell gehalten bleibt.

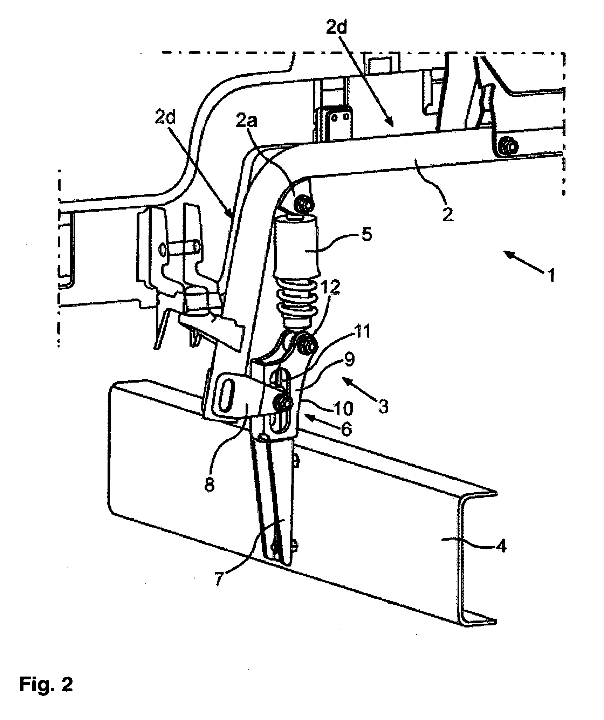

Figur 2 zeigt die an einem Rahmenlängsträger mit Hilfe eines Lagerbocks 7 angeschraubte Lageranordnung 3, die eine Verbindung zwischen der Quertraverse 2 und dem Rahmenlängsträger 4 herstellt. Die Lageranordnung verfügt hierbei, wie zuvor bereits beschrieben, zusätzlich zum Lagerbock 7 über eine Feder-Dämpfereinheit 5 sowie eine Einheit zur Seitenführung 6. Die Feder-Dämpfereinheit 5 ermöglicht eine vertikale Bewegung des Fahrerhauses bis zu einer vorgegebenen maximalen Vertikalbewegung. Durch die Seitenführung 6, insbesondere die im Führungselement 9 beweglich gelagerte Führungsrolle 12, die über einen Halter 8 an der Quertraverse 2 befestigt ist, kann die Quertraverse 2 gemeinsam mit dem Halter 8, der Schraube 13 und der Führungsrolle 12 eine Vertikalbewegung relativ zum Rahmenlängsträger 4 mit dem daran befestigten Lagerbock 7 sowie dem Führungselement 9 ausführen. Durch die Fixierung der Führungsrolle 12 quer und längs zur Fahrzeuglängsachse wird gleichzeitig zuverlässig sichergestellt, dass auftretende Seitenkräfte aufgenommen werden. Außerdem gewährleistet eine derartige Lagerung der Führungsrolle 12, dass bei einem Bruch der Feder-Dämpfereinheit 5 das Fahrerhaus nach wie vor sicher mit dem Rahmenlängsträger verbunden ist.

Da das Führungselement mit seiner kulissenartigen Führung unterschiedliche Laufspiele und teilweise einen Verzug aufweist, kann es bei Vertikalbewegungen mit den bekannten Führungsrollen zu einer Geräuschbildung kommen. Ebenso kann es bei Verwendung von weichen Materialien für die Rolle zu Qietschgeräuschen kommen, da derartige Rollen zum Steckenbleiben neigen. Bei harten Rollen, wie etwa den bekannten Polyamid-Führungsrollen, kann es demgegenüber, etwa beim Abstellen des Motors zu Klappergeräuschen kommen.
Die erfindungsgemäß ausgeführte Führungsrolle 12 der Seitenführung 6 verfügt daher über einen lagerfähigen Innenteil, bzw. Innenbuchse, und einen weichen, vergleichsweise verschleißfreien Außenteil. Sowohl Innen- als auch Außenteil sind hohlzylinderförmig ausgeführt, wobei der Außendurchmesser des Innenteils im Wesentlichen, insbesondere ohne Berücksichtigung der speziell konturierten Kontaktbereiche, dem Innendurchmesser des Außenteils entspricht. Eine geeignete Führungsrolle 12 der Seitenführung 6 ist daher als Hybridrolle ausgeführt mit einem Innenteil, der Polyoxymethylen (POM) aufweist, und einem Außenteil, der über ein thermoplastisches Polyolefin, insbesondere Thermopren^{®} oder Neopren^{®}, verfügt.

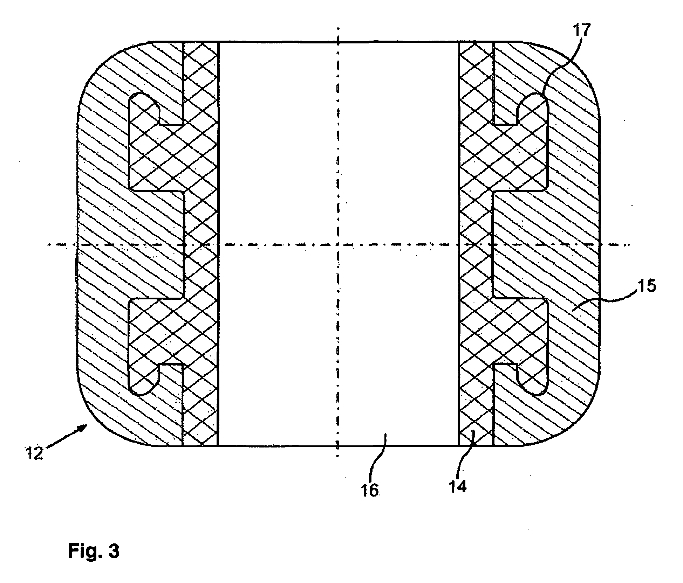

Figur 3 zeigt eine Längsschnittansicht einer erfindungsgemäß ausgeführten Führungsrolle 12. Die Führungsrolle 12 über eine zylinderförmige, symmetrisch um die Längsmittenachse angeordnete Ausnehmung 16, in die während der Montage eine rechte und eine linke Lagerbuchse sowie eine Schraube 13 eingeführt werden.
Des Weiteren verfügt die Führungsrolle 12 über einen Innen- 14 sowie einen Außenteil 15, die im Bereich ihrer Außen- und Innenmantelflächen mit einander eine Kontaktfläche bilden. Der Innenteil 14 verfügt erfindungsgemäß über ein Polyoxymethylen (POM), während der Außenteil 15 aus einem Polyolefin-Elastomer, das beispielsweise unter der Handelsbezeichnung Thermopren^{®} erhältlich ist, gefertigt ist. In einem Kontaktbereich verfügen der Innen- 14 sowie der Außenteil 15 über eine geeignete Kontur 17, die eine zumindest teilweise formschlüssige Verbindung der beiden Teile ermöglicht. Die Kontur 17 zeichnet sich durch einen Hinterschnitt aus, der auf der Rückseite pilzkopfartiger Erhebungen der Mantelfläche des Innenteils 14 vorgesehen ist.

Die in Figur 3 dargestellte spezielle Form der Kontur 17 stellt sicher, dass Innen- 14 und Außenteil 15 der Führungsrolle 12 dauerhaft verbunden bleiben und nicht durch Walkarbeit, Stosskräfte, Hochdruckreinigung, UV-Strahlen und ähnliches von einander getrennt werden. Wesentlich für die Geometrie des Innen- 14 sowie des Außenteils 15 neben der speziellen Kontur 17 ist, dass im mittleren Bereich, wo die Krafteinleitung in die Rolle 12 überwiegend erfolgt, die größte Wandstärke des Außenteils 15 vorhanden ist.

Eine erfindungsgemäß ausgeführte, wie in Figur 3 dargestellte Führungsrolle 12 stellt somit sicher, dass sich hintere Fahrerhauslager, die sich gemeinsam auf einer am Fahrgestellrahmen befestigten Quertraverse 2 abstützen, realisiert werden können, die besonders verschleißarm sind und durch die die Entstehung von störenden Quietsch- und/oder Klappergeräuschen im Lagerbereich zuverlässig unterbunden werden kann.

### Bezugszeichenliste

- 1: hintere Fahrerhauslagerung
- 2: Quertraverse
- 3: Lageranordnung
- 4: Rahmenlängsträger
- 5: Feder-Dämpfereinheit
- 6: Seitenführung
- 7: Lagerbock
- 8: Halter
- 9: Führungselement
- 10: Seitenwand
- 11: Langloch
- 12: Führungsrolle
- 13: Schraube
- 14: Innenteil
- 15: Außenteil
- 16: Ausnehmung in Führungsrolle
- 17: Kontur

## Patentansprüche

1. Hintere Lagerung (1) eines Nutzfahrzeugfahrerhauses mit einer quer zu Rahmenlängsträgern (4) angeordneten Quertraverse (2), die beidseitig über jeweils eine Lageranordnung (3) an den Rahmenlängsträgern (4) eines Fahrgestellrahmens befestigt ist, wobei die Lageranordnung (3) eine Feder- und/oder Dämpfereinheit (5) sowie eine Seitenführung (6) aufweist, die an unterschiedlichen Anlenkungspunkten (2a, 2b) der Quertraverse (2) befestigt sind, und die Seitenführung (6) eine vertikal innerhalb einer Führung (9) beweglich angeordnete Rolle (12) aufweist, die über ein Befestigungsmittel (7, 13) an der Quertraverse (2) befestigt ist,
wobei die Rolle (12) von wenigstens einer Schraube (13) oder einem Bolzen durchdrungen wird, die bzw. der innerhalb einer Ausnehmung (11) der Führung (9) vertikal beweglich angeordnet ist, **dadurch gekennzeichnet, dass** die Rolle (12) wenigstens einen Innen- (14) und einen Außenteil (15) aufweist, wobei der Innenteil (14) einen thermoplastischen Kunststoff und der Außenteil (15) ein thermoplastisches Elastomer aufweist.

2. Lagerung nach Anspruch 1,
**dadurch gekennzeichnet**, der Innenteil (14) ein Polyoxymethylen (POM) aufweist.

3. Lagerung nach Anspruch 1 oder 2,
**dadurch gekennzeichnet, dass** der Außenteil (15) einen teilkristallinen Thermoplasten aufweist.

4. Lagerung nach einem der Ansprüche 1 bis 3,
**dadurch gekennzeichnet, dass** der Außenteil (15) ein Polyolefin aufweist.

5. Lagerung nach einem der Ansprüche 1 bis 4,
**dadurch gekennzeichnet, dass** der Außenteil (15) Polyethylen (PE), Polypropylen (PP), Polyisobutylen (PIB) oder Polybutylen (PB) aufweist.

6. Lagerung nach einem der Ansprüche 1 bis 5,
**dadurch gekennzeichnet, dass** der Innenteil (14) der Rolle (12) durch Spritzen oder Drehen hergestellt ist.

7. Lagerung nach einem der Ansprüche 1 bis 6,
**dadurch gekennzeichnet, dass** die Rolle (12) durch Umspritzen des Innenteils (14) mit wenigstens einem den Außenteil (15) bildenden thermoplastischen Elastomer hergestellt ist.

8. Lagerung nach einem der Ansprüche 1 bis 7,
**dadurch gekennzeichnet, dass** eine Wandstärke des Innen- (14) und/oder des Außenteils (15) variiert.

9. Lagerung nach einem der Ansprüche 1 bis 8,
**dadurch gekennzeichnet, dass** der Außenteil (15) in dem für eine Krafteinleitung in die Rolle (12) vorgesehenen Bereich die größte Wandstärke aufweist.

10. Lagerung nach einem der Ansprüche 1 bis 9,
**dadurch gekennzeichnet, dass** der Innen- (14) und der Außenteil (15) in einem Kontaktbereich jeweils eine derart geformte Innen- sowie eine Außenkontur (17) aufweisen, dass wenigstens abschnittsweise eine formschlüssige Verbindung zwischen dem Innen-(14) und dem Außenteil (15) besteht.

## Claims

1. Rear mounting (1) for the driver's cab of a utility vehicle comprising a cross beam (2), which is arranged transversely in relation to the frame side members (4) and is fastened on both sides to the frame side members (4) of a chassis frame in each case by way of a bearing arrangement (3), wherein the bearing arrangement (3) has a spring and/or damper unit (5) and also a side guide (6), which are fastened at different points of articulation (2a, 2b) of the cross beam (2), and the side guide (6) has a roller (12), which is arranged vertically movably within a guide (9) and is fastened to the cross beam (2) by way of a fastening means (7, 13), wherein the roller (12) is penetrated by at least one screw (13) or a bolt, which is arranged vertically movably within a recess (11) of the guide (9), **characterized in that** the roller (12) has at least one inner part (14) and an outer part (15), the inner part (14) comprising a thermoplastic resin and the outer part (15) comprising a thermoplastic elastomer.

2. Mounting according to Claim 1, **characterized in that** the inner part (14) comprises a polyoxymethylene (POM).

3. Mounting according to Claim 1 or 2, **characterized in that** the outer part (15) comprises a partially crystalline thermoplastic.

4. Mounting according to one of Claims 1 to 3, **characterized in that** the outer part (15) comprises a polyolefin.

5. Mounting according to one of Claims 1 to 4, **characterized in that** the outer part (15) comprises polyethylene (PE), polypropylene (PP), polyisobutylene (PIB) or polybutylene (PB).

6. Mounting according to one of Claims 1 to 5, **characterized in that** the inner part (14) of the roller (12) is produced by injection moulding or turning.

7. Mounting according to one of Claims 1 to 6, **characterized in that** the roller (12) is produced by overmoulding the inner part (14) with at least one thermoplastic elastomer forming the outer part (15).

8. Mounting according to one of Claims 1 to 7, **characterized in that** a wall thickness of the inner part (14) and/or of the outer part (15) varies.

9. Mounting according to one of Claims 1 to 8, **characterized in that** the outer part (15) has the greatest wall thickness in the region that is intended for introducing force into the roller (12).

10. Mounting according to one of Claims 1 to 9, **characterized in that** the inner part (14) and the outer part (15) respectively have in a contact region an inner contour and an outer contour (17) shaped in such a way that at least in certain portions there is a positive connection between the inner part (14) and the outer part (15).

## Revendications

1. Articulation arrière (1) pour cabine de véhicule utilitaire avec une traverse (2) disposée transversalement aux longerons de châssis (4), qui est fixée des deux côtés aux longerons de châssis (4) d'un cadre de châssis respectivement au moyen d'un dispositif d'appui (3), dans laquelle le dispositif d'appui (3) présente une unité de ressort et/ou d'amortisseur (5) ainsi qu'un guidage latéral (6), qui sont fixés à différents points d'articulation (2a, 2b) de la traverse (2), et le guidage latéral (6) présente un rouleau (12) disposé à l'intérieur d'un guidage (9) et mobile verticalement, qui est fixé à la traverse (2) à l'aide d'un moyen de fixation (7, 13), dans laquelle le rouleau (12) est traversé par au moins une vis (13) ou un boulon, qui est mobile verticalement à l'intérieur d'un évidement (11) du guidage (9), **caractérisée en ce que** le rouleau (12) présente au moins une partie intérieure (14) et une partie extérieure (15), dans laquelle la partie intérieure (14) présente une matière plastique thermoplastique et la partie extérieure (15) présente un élastomère thermoplastique.

2. Articulation selon la revendication 1, **caractérisée en ce que** la partie intérieure (14) présente un polyoxyméthylène (POM).

3. Articulation selon la revendication 1 ou 2, **caractérisée en ce que** la partie extérieure (15) présente un thermoplastique partiellement cristallin.

4. Articulation selon l'une quelconque des revendications 1 à 3, **caractérisée en ce que** la partie extérieure (15) présente une polyoléfine.

5. Articulation selon l'une quelconque des revendications 1 à 4, **caractérisée en ce que** la partie extérieure (15) présente du polyéthylène (PE), du polypropylène (PP), du polyisobutylène (PIB) ou du polybutylène (PB).

6. Articulation selon l'une quelconque des revendications 1 à 5, **caractérisée en ce que** la partie intérieure (14) du rouleau (12) est fabriquée par injection ou tournage.

7. Articulation selon l'une quelconque des revendications 1 à 6, **caractérisée en ce que** le rouleau (12) est fabriqué par enrobage de la partie intérieure (14) avec au moins un élastomère thermoplastique formant la partie extérieure (15).

8. Articulation selon l'une quelconque des revendications 1 à 7, **caractérisée en ce qu'**une épaisseur de paroi de la partie intérieure (14) et/ou de la partie extérieure (15) varie.

9. Articulation selon l'une quelconque des revendications 1 à 8, **caractérisée en ce que** la partie extérieure (15) présente la plus grande épaisseur de paroi dans la région prévue pour une introduction de force dans le rouleau (12).

10. Articulation selon l'une quelconque des revendications 1 à 9, **caractérisée en ce que** la partie intérieure (14) et la partie extérieure (15) présentent dans la région de contact respectivement un contour intérieur et un contour extérieur (17) formés de telle manière qu'il existe au moins localement un assemblage par emboîtement entre la partie intérieure (14) et la partie extérieure (15).
